(19) Europäisches Patentamt
European Patent Office
Office européen des brevets

(11) **EP 2 949 688 A1**

(12) **EUROPEAN PATENT APPLICATION**

(43) Date of publication:
**02.12.2015 Bulletin 2015/49**

(21) Application number: **14169934.8**

(22) Date of filing: **27.05.2014**

(51) Int Cl.:
*C08J 3/20* (2006.01)   *C08L 23/10* (2006.01)
*B01J 8/24* (2006.01)   *C08L 23/26* (2006.01)
*C08L 23/12* (2006.01)   *C08K 5/14* (2006.01)
*C08K 5/01* (2006.01)   *C08F 8/00* (2006.01)
*C08F 255/02* (2006.01)   *C08F 236/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Borealis AG
1220 Vienna (AT)**

(72) Inventors:
• **Vavizos, Nikolaos
1150 Wien (AT)**
• **Kanellopoulos, Vasileios
02130 Espoo (FI)**
• **Krallis, Apostolos
02600 Espoo (FI)**

(74) Representative: **Maiwald Patentanwalts GmbH
Elisenhof
Elisenstrasse 3
80335 München (DE)**

Remarks:
Amended claims in accordance with Rule 137(2)
EPC.

(54) **A process for treatment of polymers using a spouted bed mixer**

(57)    The present invention relates to a process for the chemical treatment of polymers comprising the following steps:
i) providing a polymer P);
ii) introducing the polymer P) into a spouted bed mixer;
iii) keeping the polymer P) within the spouted bed mixer such that the mean residence time τ of the polymer P) in the spouted bed mixer is at least 1 minute;
iv) optionally, contacting the polymer P) with a chemical substance B) in the spouted bed mixer during step iii);
v) withdrawing the polymer from the spouted bed mixer whereby a chemical substance A) is added to the polymer P) during the course of steps i) to iii) or, in case step iv) is present during the course of steps i) to iv).

The present invention furthermore relates to a spouted bed mixer for the chemical treatment of polymers comprising feeding means for feeding polymer to the spouted bed mixer whereby the feeding means are equipped with means for contacting the polymer with a chemical substance A) prior to feeding to the spouted bed mixer.

The present invention furthermore, relates to the use of a spouted bed mixer in the production of high melt strength polypropylene and to a polymer obtainable by the process according to the invention.

EP 2 949 688 A1

**Description**

The present invention relates to a process for chemical treatment of polymers using a spouted bed mixer, to a spouted bed mixer for chemical treatment of polymers and the use thereof. The present invention is particularly suitable for producing high melt strength polypropylene.

Polymers frequently contain additives which may be added in pure form or admixed to the polymer as so-called master batches wherein the additive to be added is dispersed in a polymer in high concentration and this master batch is then added to the polymer. Additives may also be added to the hopper of an extruder, usually in liquid form, and the additive is then soaked into the polymer. Also in case of producing high melt strength polypropylene soaking of the polypropylene with a radical forming agent, usually a peroxide and, optionally a bifunctional monomer, such as a diene, is effected. Such a process is for example described in EP 0 879 830.

However, depending on the particle size of the polymer to be treated the substance to be soaked into may only be present in the shell of the polymer particle but not in the core or the distribution of the substance within the polymer takes considerably long. In case of additives this may compensated by intensified mixing of the polymer melt, for example in an extruder, or longer mixing times. However, the longer the polymer is in molten state the more decomposition occurs. Alternatively smaller polymer particles (<1000 $\mu$m) maybe used. However, handling of smaller particles is more cumbersome and depending on the polymerization process it may not be possible or desirable from an economic point of view to produce smaller particles. Moreover, in case a reaction between the polymer and the substances is desired, as, e.g. in case of high melt strength polypropylene ("HMS-PP"), homogenous distribution of the radical forming agent and, optionally, a bifunctional monomer is important as, otherwise, a non-homogenous product is obtained in case the radical forming agent is only present in a small part of the particle as the reaction usually starts in the melt-mixing device, e.g. extruder, prior to complete homogenization of the polymer melt. This may be compensated for by longer soaking times which, however, are undesirable from an economic point of view.

Thus, there is the need for a process and apparatus for distributing substances to be soaked into a polymer more homogenously within the polymer particle and which is also suitable for larger polymer particles, e.g. having a size of $\geq$ 1000 $\mu$m. It has been surprisingly found that this can be accomplished using a spouted bed mixer.

Spouted bed devices are commonly used as driers and, for example, described in EP 0 220 912.

The present invention therefore provides a process comprising the following steps

i) providing a polymer P);
ii) introducing the polymer P) into a spouted bed mixer;
iii) keeping the polymer P) within the spouted bed mixer such that the mean residence time $\tau$ of the polymer P) in the spouted bed mixer is at least 1 minute;
iv) optionally, contacting the polymer P) with a chemical substance B) in the spouted bed mixer during step iii);
v) withdrawing the polymer from the spouted bed mixer whereby a chemical substance A) is added to the polymer P) during the course of steps i) to iii) or, in case step iv) is present during the course of steps i) to iv).

With the process of the present invention component A) and B), if present, are surprisingly absorbed faster by the polymer significantly reducing the treatment time needed. Although the process is applicable to small polymer particles (< 1000 $\mu$m), the process is particularly advantageous in case of large polymer particles ($\geq$ 1000 $\mu$m) as the absorption time is usually higher due to the worse surface to volume ratio of bigger particles compared with smaller particles. In case of producing high melt strength polypropylene ("HMS-PP") the process of the invention leads to a more homogenous product, with concomitantly reduced production time.

In the present invention "chemical treatment" excludes exclusively drying the polymer. Although some drying, e.g. removal of residual hydrocarbons from the polymer, may occur in the course of the process according to the present invention, in the process according to the invention a chemical substance A) is introduced into the polymer which usually remains unchanged within the polymer upon withdrawal of the polymer from the spouted bed mixer and further processing in a melt-mixing device, as e.g. in case of antioxidants, but may undergo a reaction with the polymer subsequently, as e.g. in case of production of high melt strength polypropylene in a subsequent extruder.

The polymer P) maybe an ethylene homo- or copolymer or a propylene homo- or copolymer.

Preferably, the polymer P) is a propylene homo- or copolymer PP).

Component PP) is preferably a propylene homo- or random copolymer.

The propylene copolymer, preferably the preferred propylene random copolymer, preferably has a comonomer content of 0.02 to 10.0 mol%, more preferably of 0.5 to 7.0 mol%.

In case of a propylene copolymer, preferably the preferred propylene random copolymer, the propylene copolymer comprises comonomers copolymerisable with propylene, such as ethylene and/or $C_4$ to $C_{12}$ alpha-olefins, preferably ethylene and/or $C_4$ to $C_{10}$ alpha-olefins, such as ethylene, 1-butene and/or 1-hexene. Especially preferred is ethylene as comonomer.

In a preferred embodiment the propylene copolymer, preferably the preferred propylene random copolymer, consists of propylene and ethylene and/or $C_4$ to $C_{12}$ alpha-olefins, more preferably consists of propylene and ethylene and/or $C_4$ to $C_{10}$ alpha-olefins, such as ethylene, 1-butene and/or 1-hexene and most preferably consists of propylene and ethylene. The melt flow rate MFR, determined according to ISO 1133 at 230°C and a load of 2.16 kg, of propylene homo- or copolymer PP) is preferably from 0.05 g/10 min to 25 g/10 min, more preferably from 0.05 g/10 min to 20 g/10 min and most preferably from 0.05 g/10 min to 10 g/10 min.

Polymer P) is usually in particulate form, preferably the particle size of the polymer P) is from 50 $\mu$m to 4000 $\mu$m, more preferably from 100 $\mu$m to 3500 $\mu$m and most preferably from 200 to 3000 $\mu$m. As already outlined above the process according to the present invention is particularly suitable in case of larger particles. Hence, in a preferred embodiment the particle size of the polymer P) is from 500 $\mu$m to 4000 $\mu$m, more preferably from 1000 $\mu$m to 3500 $\mu$m and most preferably from 1200 to 3000 $\mu$m.

Preferably, the chemical substance A) is a radical forming compound, usually a thermally decomposition radical forming agent.

Peroxides are preferred thermally decomposing free radical-forming agents. More preferably the thermally decomposing free radical-forming agents are selected from the group consisting of acyl peroxide, alkyl peroxide, hydroperoxide, perester and peroxycarbonate.

The following listed peroxides are in particular preferred:

Acyl peroxides: benzoyl peroxide, 4-chlorobenzoyl peroxide, 3-methoxybenzoyl peroxide and/or methyl benzoyl peroxide.

Alkyl peroxides: allyl t-butyl peroxide, 2,2-bis(t-butylperoxybutane), 1,1-bis(t-butylperoxy)-3,3,5-trimethylcyclohexane, n-butyl-4,4-bis(t-butylperoxy) valerate, diisopropylaminomethyl-t-amyl peroxide, dimethylaminomethyl-t-amyl peroxide, diethylaminomethyl-t-butyl peroxide, dimethylaminomethyl-t-butyl peroxide, 1,1 -di-(t-amylperoxy)cyclohexane, t-amyl peroxide, t-butylcumyl peroxide, t-butyl peroxide and/or 1-hydroxybutyl n-butyl peroxide.

Peresters and peroxy carbonates: butyl peracetate, cumyl peracetate, cumyl perpropionate, cyclohexyl peracetate, di-t-butyl peradipate, di-t-butyl perazelate, di-t-butyl perglutarate, dit-butyl perthalate, di-t-butyl persebacate, 4-nitrocumyl perpropionate, 1-phenylethyl perbenzoate, phenylethyl nitro-perbenzoate, t-butylbicyclo-(2,2,1)heptane percarboxylate, t-butyl-4-carbomethoxy perbutyrate, t-butylcyclobutane percarboxylate, t-butylcyclohexyl peroxycarboxylate, t-butylcyclopentyl percarboxylate, t-butylcyclopropane percarboxylate, t-butyldimethyl percinnamate, t-butyl-2-(2,2-diphenylvinyl) perbenzoate, t-butyl-4-methoxy perbenzoate, t-butylperbenzoate, t-butylcarboxycyclohexane, t-butyl pernaphthoate, t-butyl peroxyisopropylcarbonate, t-butyl pertoluate, t-butyl-1-phenylcyclopropyl percarboxylate, t-butyl-2-propylperpentene-2-oate, t-butyl-1-methylcyclopropyl percarboxylate, t-butyl-4-nitrophenyl peracetate, t-butylnitrophenyl peroxycarbamate, t-butyl-N-succiimido percarboxylate, t-butyl percrotonate, t-butyl permaleic acid, t-butyl permethacrylate, t-butyl peroctoate, t-butyl peroxyisopropylcarbonate, t-butyl perisobutyrate, t-butyl peracrylate and/or t-butyl perpropionate.

Also contemplated are mixtures of these above listed free radical-forming agents.

Usually chemical substance A) is in liquid form when added to the polymer P) during the course of steps i) to iii) or, in case step iv) is present during the course of steps i) to iv). In case component A) is not a liquid at the pressure and temperature applied, a solution of compound A) is used. As solvent usually organic solvents are used which are compatible with the respective polymer, such as aliphatic hydrocarbons, e.g. pentane, hexane, heptane, isobutane, isododecane.

Preferably, the chemical substance B) is a bifunctionally unsaturated monomer.

"Bifunctionally unsaturated" as used above means preferably the presence of two nonaromatic double bonds, as in e.g. divinylbenzene or cyclopentadiene. Only such bifunctionally unsaturated compounds are used which can be polymerized, preferably with the aid of free radicals.

The bifunctionally unsaturated monomers may be

divinyl compounds, such as divinylaniline, m-divinylbenzene, p-divinylbenzene, divinylpentane and divinylpropane;
allyl compounds, such as allyl acrylate, allyl methacrylate, allyl methyl maleate and allyl vinyl ether;
dienes, such as 1,3-butadiene, chloroprene, cyclohexadiene, cyclopentadiene, 2,3-dimethylbutadiene, heptadiene, hexadiene, isoprene and 1,4-pentadiene;
aromatic and/or aliphatic bis (maleimide) bis (citraconimide) and mixtures of these unsaturated monomers.

Especially preferred bifunctionally unsaturated monomers are 1,3-butadiene, isoprene, dimethyl butadiene and divinylbenzene.

The amount of component B) used in the process according to the present invention is preferably 0.01 to 10.0 wt.-% based on the total amount of the sum of polymer P), component A) and component B).

In case step iv) is effected, step iv) is preferably effected during the whole course of step iii).

The amount of component A) used in the process according to the present invention is preferably 0.05 to 1.0 wt.-% based on the total amount of the sum of polymer P), component A) and component B), if present.

Step iii) is usually effected at a temperature of 30°C to 100°C, preferably at a temperature of 40°C to 80°C and most preferably at a temperature of 50°C to 70°C, determined inside the spouted bed mixer at the outer wall of the spouted bed mixer and at the upper end of the polymer bed.

The pressure during step iii) is usually at least 900 mbar, preferably at least 950 mbar. Effecting step iii) at a pressure higher than 1 bar further reduces the necessary mean residence time for the polymer. Thus, in an alternative embodiment the spouted bed mixer is operated at a pressure higher than 1 bar, preferably higher than 2 bar. Usually the pressure in the spouted bed mixer is not above 5 bar.

A gas G) is introduced into the spouted bed mixer during step iii) usually at the bottom of the spouted bed mixer.

The gas G) maybe an inert gas, e.g. $N_2$, Ar, He, Ne, Kr, Xe, or air, preferably is an inert gas, e.g. $N_2$, Ar, He, Ne, Kr, Xe, and most preferably is nitrogen.

Preferably, component B) is present and G) and B) are mixed prior to introduction into the spouted bed mixer.

The gas G), or the mixture of gas G) and component B), if present, is preferably introduced into the spouted bed mixer with a velocity of 5 to 40 m/s, preferably 8 to 30 m/s.

Preferably, the gas G), or the mixture of gas G) and component B), if present is introduced into the spouted bed mixer during the whole course of step iii) of the process according to the invention.

Preferably the mean residence time $\tau$ of the polymer P) in the spouted bed mixer is from 1 to 30 min, more preferably from 3 to 25 min and most preferably from 5 to 25 min.

The process of the present invention can be carried out in batch mode or continuously, preferably continuously.

In the process of the present invention preferably, the following relationship is fulfilled

$$\tau \geq 2.0 \, t_c$$

wherein

$\tau$     is the mean residence time of the polymer P) in step iii); and

$t_c$     is the cycle time of the polymer P) in step iii),

more preferably the following relationship is fulfilled

$$\tau \geq 3.5 \, t_c$$

and most preferably the following relationship is fulfilled

$$\tau \geq 5.0 \, t_c$$

with $\tau$ and $t_c$ as defined above.

Usually, the following relation is fulfilled $\tau \leq 20.0 \, t_c$ with $\tau$ and $t_c$ as defined above, preferably $\tau \leq 16.0 \, t_c$ with $\tau$ and $t_c$ as defined above.

The polymer maybe introduced to the top of the spouted bed mixer in step ii) and withdrawn from the bottom of the spouted bed mixer in step v) or introduced to the bottom of the spouted bed mixer in step ii) and withdrawn from the top of the polymer bed in the spouted bed mixer in step v), preferably, polymer is introduced to the top of the spouted bed mixer in step ii) and withdrawn from the bottom of the spouted bed mixer in step v).

In case the polymer is added to the top of the spouted bed mixer in step ii), the polymer maybe added centrally at the top or near the wall. In this regard centrally denotes that the geometric center of the spouted bed mixer and the geometric center of the opening the polymer is added through to the spouted bed mixer coincide.

Preferably the polymer is added centrally at the top, viewed along the vertical axis of the spouted bed mixer. Thereby a more homogenous distribution around the annulus is usually obtained.

In case the polymer is added to the top of the spouted bed mixer in step ii) preferably a deflection plate is present in the spouted bed mixer between the outlet of the polymer in the spouted bed mixer and the polymer bed. Such a deflection plate can, for example, be conical or domed.

Thereby polymer is usually more evenly distributed around the annulus. Moreover, polymer introduced into the spouted bed mixer may not fall into the spout.

In case the polymer P) is introduced at the bottom of the spouted bed mixer the polymer P) is preferably introduced at the bottom of the spouted bed mixer together with the gas G) or the mixture of gas G) and component B), if present, more preferably polymer P) is contacted with the chemical substance A) prior to being contacted with the gas G) or the mixture of gas G) and component B), if present.

Means for introducing and withdrawing polymer are known in the art.

The spouted bed mixer further comprises means for circulating gas. Such mean are well-known in the art and may include gas/solid separation means, e.g. cyclones, as also well-known in the art.

As outlined above, a chemical substance A) is added to the polymer P) during the course of steps i) to iii) or, in case step iv) is present during the course of steps i) to iv).

Hence, the chemical substance A) maybe added to the polymer P) prior to introduction of the polymer P) into the spouted bed mixer or chemical substance A) maybe added directly into the spouted bed mixer. In the latter case of directly adding chemical substance A) into the spouted bed mixer usually the polymer P) and the chemical substance A) are introduced through separate openings into the spouted bed mixer.

For example polymer P) maybe introduced to the top of the spouted bed mixer according to any of the embodiments according to the present invention and chemical substance A) may also be added to the top of the spouted bed mixer. This may be effected using a spraying nozzle. In case chemical substance A) is added to the top of the spouted bed mixer chemical substance A) is usually introduced into the spouted bed mixture at a location above the polymer bed in the spouted bed mixer.

Polymer P) may alternatively be introduced at the bottom of the spouted bed mixer according to any of the embodiments according to the present invention and the chemical substance A) is added to the top of the spouted bed mixer, e.g. using a spraying nozzle which is usually located above the polymer bed in the spouted bed mixer, or chemical substance A) is also introduced at the bottom of the spouted bed mixer.

In case chemical substance A) is added to the spouted bed mixer, chemical substance A) is preferably added to the spouted bed mixer while step ii) is effected, more preferably during the whole course while step ii) is effected.

Thus, in case of a batch process usually chemical substance A) and polymer P) are both added to the spouted bed mixer simultaneously or subsequently. In case of subsequent of polymer P) and chemical substance A) the pause between the addition of P) and A) is usually less than 5 min, irrespective of the order of addition.

In case of a continuous process usually chemical substance A) is added to the spouted bed mixer during the whole course of the continuous process.

Alternatively, chemical substance A) is added to the polymer P) prior to introduction of the polymer P) into the spouted bed mixer.

In case chemical substance A) is added to the polymer P) prior to introduction of the polymer P) into the spouted bed mixer usually contacting of the polymer P) with chemical substance A) is effected substantially at the same pressure and temperature as present in the spouted bed mixer. Thus, the temperature and pressure during contacting of the polymer P) with chemical substance A) usually does not deviate by more than 10 % compared with the temperature and pressure in the spouted bed mixer, preferably temperature and pressure during contacting of the polymer P) with chemical substance A) in step i) are the same as the temperature and pressure in the spouted bed mixer.

In a preferred embodiment the process comprising the following steps

a) contacting a polymer P) with a chemical substance A) to obtain a contacted polymer CP):
b) introducing the contacted polymer CP) into a spouted bed mixer;
c) keeping the contacted polymer CP) within the spouted bed mixer such that the mean residence time $\tau$ of the contacted polymer CP) in the spouted bed mixer is at least 1 minute;
d) optionally, contacting the contacted polymer CP) with a chemical substance B) in the spouted bed mixer during step c);
e) withdrawing the polymer from the spouted bed mixer.

Unless mentioned to the contrary in the following preferred features of the preferred embodiment of the process of the invention are described.

The preferred features of components A) and B) including their amounts defined above also apply to the preferred embodiment of the process.

In step a) a polymer P) is contacted with a chemical substance A) to obtain a contacted polymer CP). Preferably, the polymer P) is contacted with the chemical substance A) no earlier than 1 min prior to introducing the polymer into the spouted bed mixer in step b). Usually chemical substance A) is in liquid form when being contacted with the polymer P). In case component A) is not a liquid at the pressure and temperature applied during contacting a solution of compound A) is used. As solvent usually organic solvents are used which are compatible with the respective polymer, such as aliphatic hydrocarbons, e.g. pentane, hexane, heptane, isobutane, isododecane. The polymer P) is usually contacted with the chemical substance A) no later than 10 min prior to introducing the polymer into the spouted bed mixer in step b).

Usually contacting of the polymer P) with chemical substance A) in step a) is effected substantially at the same pressure and temperature as present in the spouted bed mixer. Thus, the temperature and pressure during contacting of the polymer P) with chemical substance A) usually does not deviate by more than 10 % compared with the temperature and pressure in the spouted bed mixer, preferably temperature and pressure during contacting of the polymer P) with chemical substance A) in step a) are the same as the temperature and pressure in the spouted bed mixer. Preferably the mean residence time $\tau$ of the contacted polymer CP) in the spouted bed mixer is from 1 to 30 min, more preferably from 3 to 25 min and most preferably from 5 to 25 min.

In case step d) is effected, step d) is preferably effected during the whole course of step c).

Step c) is usually effected at a temperature of 30°C to 100°C, preferably at a temperature of 40°C to 80°C and most preferably at a temperature of 50°C to 70°C, determined inside the spouted bed mixer at the outer wall of the spouted bed mixer and at the upper end of the polymer bed.

The pressure during step c) is usually at least 900 mbar, preferably at least 950 mbar.

Effecting step c) at a pressure higher than 1 bar further reduces the necessary mean residence time for the polymer. Thus, in an alternative embodiment the spouted bed mixer is operated at a pressure higher than 1 bar, preferably higher than 2 bar.

Usually the pressure in the spouted bed mixer is not above 5 bar.

A gas G) is introduced into the spouted bed mixer during step c) usually at the bottom of the spouted bed mixer.

The gas G) maybe an inert gas, e.g. $N_2$, Ar, He, Ne, Kr, Xe, or air, preferably is an inert gas, e.g. $N_2$, Ar, He, Ne, Kr, Xe, and most preferably is nitrogen.

Preferably, component B) is present and G) and B) are mixed prior to introduction into the spouted bed mixer.

The gas G), or the mixture of gas G) and component B), if present is preferably introduced into the spouted bed mixer with a velocity of 5 to 40 m/s, preferably 8 to 30 m/s.

Preferably, the gas G), or the mixture of gas G) and component B), if present is introduced into the spouted bed mixer during the whole course of step c) of the process according to the preferred embodiment of the invention.

The process of the preferred embodiment of the present invention can be carried out in batch mode or continuously, preferably in continuously.

In the process of the preferred embodiment of the present invention preferably, the following relationship is fulfilled

$$\tau \geq 2.0\, t_c$$

wherein

$\tau$    is the mean residence time of the contacted polymer CP) in step c); and
$t_c$    is the cycle time of the contacted polymer CP) in step c),

more preferably the following relationship is fulfilled

$$\tau \geq 3.5\, t_c$$

and most preferably the following relationship is fulfilled

$$\tau \geq 5.0\, t_c$$

with $\tau$ and tc as defined above.

Usually, the following relation is fulfilled $\tau \leq 20.0\, t_c$ with $\tau$ and $t_c$ as defined above, preferably $\tau \leq 16.0\, t_c$ with $\tau$ and $t_c$ as defined above.

The polymer maybe introduced to the top of the spouted bed mixer in step b) and withdrawn from the bottom of the spouted bed mixer in step e) or introduced to the bottom of the spouted bed mixer in step b) and withdrawn from the top of the polymer bed in the spouted bed mixer in step e), preferably, polymer is introduced to the top of the spouted bed mixer in step b) and withdrawn from the bottom of the spouted bed mixer in step e).

In case the polymer is added to the top of the spouted bed mixer in step b), the polymer maybe added centrally at the top or near the wall. In this regard centrally denotes that the geometric center of the spouted bed mixer and the geometric center of the opening the polymer is added through to the spouted bed mixer coincide.

Preferably the polymer is added centrally at the top, viewed along the vertical axis of the spouted bed mixer. Thereby a more homogenous distribution around the annulus is usually obtained.

In case the polymer is added to the top of the spouted bed mixer in step b) preferably a deflection plate is present in the spouted bed mixer between the outlet of the polymer in the spouted bed mixer and the polymer bed. Such a deflection plate can, for example, be conical or domed.

Thereby polymer is usually more evenly distributed around the annulus. Moreover, polymer introduced into the spouted bed mixer may not fall into the spout.

In case the polymer P) is introduced at the bottom of the spouted bed mixer the polymer P) is preferably introduced at the bottom of the spouted bed mixer together with the gas G) or the mixture of gas G) and component B), if present, more preferably polymer P) is contacted with the chemical substance A) prior to being contacted with the gas G) or the mixture of gas G) and component B), if present.

Means for introducing and withdrawing polymer are known in the art.

The spouted bed mixer further comprises means for circulating gas. Such mean are well-known in the art and may include gas/solid separation means, e.g. cyclones, as also well-known in the art.

The preferred features of the process according to the invention as defined above equally apply to the preferred embodiment of the process.

In the following preferred features of all embodiments of the invention are described.

Preferably, chemical substance A) is a radical forming compound and chemical substance B) is present and is a bifunctionally unsaturated monomer, more preferably, chemical substance A) is selected from the group consisting of acyl peroxide, alkyl peroxide, hydroperoxide, perester and peroxycarbonate and chemical substance B) is present and is a bifunctionally unsaturated monomer.

After being withdrawn from the spouted bed mixer in step v) or step e) the polymer is usually routed to a melt-mixing device, e.g. an extruder.

Thus, the process preferably comprises the following steps
routing the polymer after withdrawal in step v) or step e) to a melt-mixing device. withdrawing the polymer from the melt-mixing device, e.g. the extruder.

After step withdrawing the polymer from the melt-mixing device, e.g. the extruder, a high melt strength polypropylene can be obtained.

Such a high melt strength polypropylene is usually having an $F_{30}$ melt strength of more than 5.5 cN, more preferably of 6.5 cN or more and/or a $v_{30}$ melt extensibility of more than 200 mm/s, more preferably of at least 220 mm/s wherein the $F_{30}$ melt strength and the $v_{30}$ melt extensibility are measured according to ISO 16790:2005.

In case component B) is a bifunctionally unsaturated monomer, component B) usually connects two polymer different chains in the high melt strength polypropylene.

In principle, component B) may also connect two different locations of the same polymer chain. However, the latter possibility is usually negligible.

Thereby one of the atoms of each of the unsaturated bonds is covalently bound to the respective polymer chain.

Alternatively, upon forming a covalent bond between one of the atoms of the first the unsaturated bond the second or further unsaturated bond may undergo radical polymerization with further molecules of component B). The end of this polymer chain is then covalently bound to the polymer.

The multifunctionally unsaturated low molecular weight polymer obtained thereby, usually has a number average molecular weight (Mn) <= 10000 g/mol.

Examples of such low molecular weight polymers are polybutadienes, especially where the different microstructures in the polymer chain, i.e. 1,4-cis, 1,4-trans and 1,2-(vinyl) are predominantly in the 1,2-(vinyl) configuration copolymers of butadiene and styrene having 1,2- (vinyl) in the polymer chain.

A preferred low molecular weight polymer is polybutadiene, in particular a polybutadiene having more than 50.0 wt.-% of the butadiene in the 1,2-(vinyl) configuration.

The present invention is furthermore directed to the use of a spouted bed mixer in the production of high melt strength polypropylene.

A high melt strength polypropylene is usually having an $F_{30}$ melt strength of more than 5.5 cN, more preferably of 6.5 cN or more and/or a $v_{30}$ melt extensibility of more than 200 mm/s, more preferably of at least 220 mm/s wherein the $F_{30}$ melt strength and the $v_{30}$ melt extensibility are measured according to ISO 16790:2005.

Preferably, in the use according to the present invention, the spouted bed mixer is used for treating a propylene homo- or copolymer PP) with radical forming compound and, optionally and preferably, a bifunctionally unsaturated monomer.

The preferred features of the process and the apparatus according to the invention also apply to the use according to the present invention and vice versa.

The present invention is furthermore directed to a spouted bed mixer for the chemical treatment of polymers comprising feeding means for feeding polymer to the spouted bed mixer whereby the feeding means are equipped with means for contacting the polymer P) with a chemical substance A) prior to feeding the polymer P) to the spouted bed mixer.

A spouted bed mixer usually contains a lower section, a middle section and an upper section viewed in axial direction from the bottom to the top.

The cross-section of the lower section viewed in directed from the bottom end of the lower section to the top end of the lower section is usually strictly monotonically increasing from the bottom end of the lower section to the top end of the lower section.

The lower section is preferably conical or truncated conical. The gas inlet is located in the lower section, usually at the bottom end of the lower section.

The height of the lower section is preferably 50 to 200 cm.

The middle section is usually cylindrical. However, small ellipsoidal deviations are possible as long as the following relation is fulfilled

$$\text{Semi-major-axis/semi-minor-axis} < 1.2$$

The inner cross section of the middle section is preferably 2000 to 20000 cm$^2$. For calculating the cross section of the middle section any internals possibly present, such as means for reducing backmixing discussed below, are not taken into account.

The height of the middle section is preferably 100 to 400 cm. Usually, the height of the middle section is higher compared with the height of the lower section and the height of the upper section.

Usually the inner cross section of the middle section is constant over the whole length of the middle section.

Preferably, the middle section is cylindrical.

The form of the upper section is usually not decisive. The upper section maybe flat or is strictly monotonically decreasing from the bottom end of the upper section to the top end of the upper section viewed in directed from the bottom end of the upper section to the top end of the upper section. Usually the upper section is conical, truncated conical or flat.

The height of the upper section is preferably not more than 200 cm.

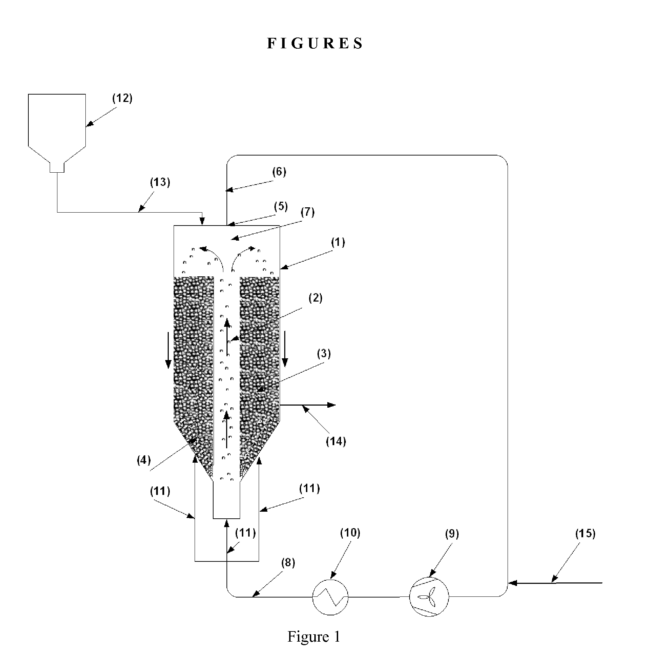

Figure 1 shows the general flow scheme in a spouted bed mixer without any means for reducing back-mixing. Polymer feed and withdrawal openings are not shown. Gas is introduced through the bottom inlet (11) and moving upwards in the middle of the spouted bed mixture, the so-called spout (2). Polymer particles are entrained into the upwardly moving gas stream and after passing beyond the height of the polymer bed (3) the particles form a fountain, i.e. the particles are distributed onto the top of the polymer bed (7). The area of the polymer bed surrounding the spout is called annulus (3).

The full list of references in figure 1 is given in the following.

(1) spouted bed vessel
(2) spouted zone
(3) annulus zone
(4) bottom zone
(5) one or more outlets for fluidization gas streams (6)
(6) fluidization gas streams
(7) upper zone
(8) gas circulation line
(9) means for gas circulating
(10) means for gas heating
(11) inlets for fluidization gas
(12) solids material feeder
(13) a solids transfer line
(14) outlet for solid material
(15) inlet(s) for chemical substances, e.g. chemical subtance B)

With the assembly shown in figure 1 particles from the region of the annulus (5) adjacent to the spout maybe entrained at any height of the spout. This leads to back-mixing of the particles which broadens the residence time distribution of the polymer which may negatively affects the homogeneity of the product.

To further improve the homogeneity of the product backmixing of the polymer maybe reduced.

Preferably, the spouted bed mixer is equipped with means for reducing back-mixing, such as draft plates or a screw. With such means the flow behavior of the polymer in the annulus of the spouted bed mixer approximate plug-flow behavior. Although ideal plug-flow behavior is desirable this is usually not accomplishable for technical reasons.

Normally the means for reducing backmixing extend from the top of the polymer bed or above to the lower section of the spouted bed mixer. Thereby it is ensured that only polymer from the bottom of the spouted bed mixer can be entrained into the spout.

One possibility to reduce backmixing is the use of draft plates as known in the art. Such draft plates separate the spout from the annulus. As well-known in the art the draft plates do not extend to the bottom of the spouted bed mixer but end above the bottom of the spouted bed mixer thereby allowing polymer from the bottom part of the polymer bed to be entrained in the spout. Usually the lower end of the draft plates is located in the bottom zone of the spouted bed mixture.

These polymer particles are then transported to the top of the polymer bed in the spouted bed mixer travel downwards and can be entrained anew into the spout depending on the residence time of the polymer in the spouted bed mixer.

Another possibility is a mechanical spouted bed mixer (MSBM). In a mechanical spouted bed not an upwardly moving gas stream generates the spout, such as in the apparatus shown in figure 1, but a conveyor screw is present, installed along the vertical axis of the spouted bed mixer. The gas G) is usually injected at the bottom of the MSBM, preferably perpendicular to the screw. The screw conveys polymer upwards in a central zone of the spouted bed mixer while the polymer in the surrounding region travels downwards as in case of a moving gas stream generating the spout, such as in the apparatus shown in figure 1. Thus, also in case of a screw a spout and an annulus are formed.

The preferred embodiments of the spouted bed mixer according to the invention also apply to the process and use of the present invention including any preferred embodiments thereof and vice versa.

The present invention is further directed to a polymer obtainable by the process according to the present invention.

The polymer obtainable by the process according to the present invention is preferably a high melt strength polypropylene. A high melt strength polypropylene is usually having an $F_{30}$ melt strength of more than 5.5 cN, more preferably of 6.5 cN or more and/or a $v_{30}$ melt extensibility of more than 200 mm/s, more preferably of at least 220 mm/s wherein the $F_{30}$ melt strength and the $v_{30}$ melt extensibility are measured according to ISO 16790:2005.

The preferred features of the process, the apparatus and the use according to the invention also apply to the polymer obtainable by the process according to the present invention and vice versa.

The present invention is further directed to a high melt strength polypropylene preferably having

- an $F_{30}$ melt strength of more than 5.5 cN, more preferably of 6.5 cN or more; and/or
- a $v_{30}$ melt extensibility of more than 200 mm/s, more preferably of at least 220 mm/s

wherein the $F_{30}$ melt strength and the $v_{30}$ melt extensibility are measured according to ISO 16790:2005 obtainable from a polymer P) having a particle size of 500 $\mu$m to 4000 $\mu$m, more preferably from 1000 $\mu$m to 3500 $\mu$m and most preferably from 1200 to 3000 $\mu$m.

The present invention is further directed to particles of polymer P) having a particle size of 500 $\mu$m to 4000 $\mu$m, more preferably from 1000 $\mu$m to 3500 $\mu$m and most preferably from 1200 to 3000 $\mu$m obtainable by the process according to the present invention.

The preferred features of the process, the apparatus, the use, the polymer obtainable by the process according to the present invention also applies to the high melt strength polypropylene and the particles obtainable by the process according to the present invention and vice versa.

Fig. 1 shows the general flow scheme in a spouted bed mixer without any means for reducing back-mixing.

The present invention will now be illustrated with the following non-limiting examples.

EXPERIMENTAL

**Cycle time and mean residence time:**

The cycle time is calculated as follows.

$$t_c = V_{PF} / (R_c + 1) \cdot F$$

with

$t_c$     is the cycle time of the contacted polymer CP);
$V_{PF}$    is the total mass of the solids in the spouted bed;
$R_c$     is the recycling ratio which is defined by the ratio of internal circulation rate to feed rate;
F       is the solids feed rate

The mean residence time is calculated as follows.

$$\tau = t_c \cdot (R_c + 1)$$

$\tau$     is the mean residence time of the contacted polymer CP);

$t_c$ and $R_c$ are as defined above
$t_c$, $R_c$ are determined by radioactive experiments where a single radioactive particle is monitored with respect to its axial location with a scintillation counter.
$V_{FP}$ is determined by the mean residence time and the solids feedrate.

## MFR

The melt flow rate of polypropylenes was determined at 230°C and under a load of 2.16 kg according to ISO 1133.

## Mean particle size of polymer particles

The mean or median particle size $d_{50}$ is calculated from the particle size distribution in terms of mass percentage as determined by laser diffraction (Malvern) technique according to ISO 13320-1.

## Crystallinity of propylene polymers

Melting temperature ($T_m$) and heat of fusion ($H_f$), crystallization temperature ($T_c$) and heat of crystallization ($H_c$): measured with Mettler TA820 differential scanning calorimetry (DSC) on 5 to 10 mg samples. DSC is run according to ISO 3146 / part 3 /method C2 in a heat / cool/heat cycle with a scan rate of 10 °C/min in the temperature range of +23 to +210°C. Crystallization temperature and heat of crystallization ($H_c$) are determined from the cooling step, while melting temperature and heat of fusion ($H_f$) are determined from the second heating step The degree of crystallinity is calculated by comparison with the heat or fusion of a perfectly crystalline polypropylene, i.e. 209 J/g.

## Comonomer content in polypropylene

The comonomer content is determined by quantitative Fourier transform infrared spectroscopy (FTIR) after basic assignment calibrated via quantitative $^{13}$C nuclear magnetic resonance (NMR) spectroscopy in a manner well known in the art. Thin films are pressed to a thickness of 250 $\mu$m and spectra recorded in transmission mode.
Specifically, the ethylene content of a polypropylene-co-ethylene copolymer is determined using the baseline corrected peak area of the quantitive bands found at 720-722 and 730-733 cm$^{-1}$. Propylene-1-butene-copolymers were evaluated at 767 cm$^{-1}$ .Quantitative results are obtained based upon reference to the film thickness.

## F30 melt strength and v30 melt extensibility

The test described herein follows ISO 16790:2005.
The strain hardening behaviour is determined by the method as described in the article " Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration.
The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). For the results presented below, the materials were extruded with a lab extruder HAAKE Polylab system and a gear pump with cylindrical die (L/D = 6.0/2.0 mm). The gear pump was pre-adjusted to a strand extrusion rate of 5 mm/s, and the melt temperature was set to 200°C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed) is taken as the F30 melt strength and drawability values.

Examples:

Used materials:

PP1: propylene homopolymer having an MFR of 0.6 g/10 min, a crystallinity of 65 % and a mean particle size of 300 $\mu$m;

PP2: propylene homopolymer having an MFR of 0.2 g/10 min, a crystallinity of 65 % and a mean particle size of 1700 $\mu$m;

Peroxide 1. tert-Butylperoxy isopropyl carbonate (70wt.% solution in isododecane) butadiene

In reference examples 1 to 3 the apparatus as described in EP 0 879 830 has been used having a volume of 1.9 m$^3$.

In inventive examples 4 to 6 the apparatus depicted in figure 1 has been used additionally containing draft plates extending. The volume of the apparatus is 1.9 m$^3$.

The spouted bed vessel (1) comprises a spouted zone (2) where the polymer solid particles are flowing upwards co-currently with the fluidization gas, an annulus zone (3) where the polymer solid particles are flowing downwards counter-currently with the fluidization gas, and a bottom zone (4), one or more outlets (5) for fluidization gas streams (6) located in the upper zone (7), a gas circulation line (8), means for gas circulating (9), means for gas heating (10), inlets (11) for fluidization gas located in the bottom zone (4), a solids material feeder (12), a solids transfer line (13) to the upper zone (7) of the spouted mixer (1), outlet for solid material (14) and inlet(s) for fresh chemical substances (15). The polymer is contacted with the peroxide in line (13) one minute prior to introducing the thereby obtained contacted polymer into the spouted bed vessel (1). Butadiene is added to the fluidization gas circulation line (8) through line (15).

After being withdrawn from the spouted bed vessel (1) through outlet (14) the polymer particles are conveyed to the extruder (not shown).

In all examples the following extruder has been used.

The Theysohn TSK 120 was utilized. The extruder comprises in operation direction a feed-throat (FT), the first mixing zone (MZ1), the second mixing zone (MZ2) and a die (D), wherein between the first mixing zone (MZ1) and the second mixing zone (MZ2) a side feed-throat (SFT) is located, wherein further the polypropylene (PP), the thermally decomposing free radical- forming agent, and optionally the bifunctionally unsaturated monomer are fed via the feed-throat (FT) and the linear polypropylene (1-PP) is fed via the side feed-throat (SFT).

The extrusion conditions were as follows:

Throughput: 1800 - 3000 kg/hr
Screw Speed: 270 - 330 rpm
Desorption Air Temperature: 115 - 130 °C
Stripping condensate: 20 - 29 kg/hr
Extruder Zones Temperature Range: 220 - 240°C

Reference Example 1 (RE1):

The mixer vessel described above was used for mixing PP1 with the peroxide and butadiene at a temperature of 65°C and a pressure of 1 bar.

PP1 was introduced into the mixing vessel via an inlet located in the top zone at a rate of 3000 kg/h. The peroxide was continuously introduced into the mixing vessel through the spraying system at a concentration equal to 0.4wt% based on the total amount of PP1, peroxide and butadiene. The butadiene was also continuously introduced at the transfer pipe located between the mixing unit and the reactive extruder at a feedrate of 5.4 kg/h. The mean residence time of the solid PP powder in the mixing unit was 10 min.

The properties of the produced HMS PP are shown in table 1 below.

Reference Example 2 (RE2):

Reference_Example 1 was repeated using PP2 under otherwise identical conditions.

The properties of the produced HMS PP are shown in table 1 below.

Reference Example 3 (RE3)

Reference Example 1 was repeated using PP2 with the difference that PP2 was introduced into the above mixing vessel via an inlet located in the top zone at a rate of 1600 kg/h and the mean residence time of the solid PP powder in the mixing unit was 20 min.

The properties of the produced HMS PP are shown in table 1 below.

Inventive Example 4 (IE4)

The invention was exemplified with the spouted bed mixer described above.

The temperature was 65 °C and the pressure 1 bar. The circulation gas volumetric flowrate was 500 m$^3$/hr and consisted of butadiene and nitrogen

PP1 was introduced into the above mixing vessel via an inlet located in the top zone at a rate of 3000 kg/h. The peroxide was continuously introduced in the solids transfer line (13) through a spraying system at a concentration equal to 0.4wt% based on the total amount of polymer and peroxide while the contact time with the polymer prior to introduction into the spouted bed mixer was 1 min. Butadiene was also continuously introduced via the circulation gas line at a feedrate of 5.4 kg/h. The mean residence time of the solid PP powder in the mixing unit was 10 min.

The properties of the produced HMS PP are shown in table 1 below.

Inventive Example 5 (IE5)

The invention was exemplified with the spouted bed mixer described above.

The temperature was 65 °C and the pressure 1 bar. The circulation gas volumetric flowrate was 500 m$^3$/hr and consisted of butadiene and nitrogen.

PP2 was introduced into the above mixing vessel via an inlet located in the top zone at a rate of 1600 kg/h. The peroxide was continuously introduced in the solids transfer line (13) through a spraying system at a concentration equal to 0.4wt% based on the total amount of polymer and peroxide while the contact time with the polymer prior to introduction into the spouted bed mixer was 1 min.. Butadiene was also continuously introduced via the circulation gas line at a feedrate of 5.4 kg/h. The mean residence time of the solid PP powder in the mixing unit was 20 min.

The properties of the produced HMS PP are shown in table 1 below.

Inventive Example 6 (IE6)

The invention was exemplified with the spouted bed mixer described above.

The temperature was 65 °C and the pressure 1 bar. The circulation gas volumetric flowrate was 500 m$^3$/hr and consisted of butadiene and nitrogen

PP2 was introduced into the above mixing vessel via an inlet located in the top zone at a rate of 2150 kg/h. The peroxide was continuously introduced in the solids transfer line (13) through a spraying system at a concentration equal to 0.4wt% based on the total amount of polymer and peroxide while the contact time with the polymer prior to introduction into the spouted bed mixer was 1 min.. Butadiene was also continuously introduced via the circulation gas line at a feedrate of 5.4 kg/h. The mean residence time of the solid PP powder in the mixing unit was 15 min.

The properties of the produced HMS PP are shown in table 1 below.

| Table 1 | RE1 | RE2 | RE3 | IE4 | IE5 | IE6 |
|---|---|---|---|---|---|---|
| Material | **PP1** | **PP2** | **PP2** | **PP1** | **PP2** | **PP2** |
| Mixer Type | Conventional | Conventional | Conventional | Spouted Bed | Spouted Bed | Spouted Bed |
| MFR (g/10 min) | 0.6 | 0.2 | 0.2 | 0.6 | 0.2 | 0.2 |

(continued)

| Table 1 | RE1 | RE2 | RE3 | IE4 | IE5 | IE6 |
|---|---|---|---|---|---|---|
| Mean Size ($\mu$m) | 300 | 1700 | 1700 | 300 | 1700 | 1700 |
| Residence time $\tau$ (s) | 600 | 600 | 1200 | 600 | 1200 | 900 |
| Peroxide (%wt) | 0.4 | 0.4 | 0.4 | 0.4 | 0.4 | 0.4 |
| Butadiene (kg/h) | 5.4 | 5.4 | 5.4 | 5.4 | 5.4 | 5.4 |
| Cycle time tc (s) | - | - | - | 110 | 100 | 105 |
| Superficial gas velocity (m/s) | - | - | - | 12.5 | 12.5 | 12.5 |
| $F_{30}$ (cN) | 9.7 | 4.3 | 5.0 | 10.5 | 8.5 | 7.2 |
| $V_{30}$ (mm/s) | 245 | 145 | 180 | 248 | 237 | 230 |

As demonstrated by example RE1 the mixer of the prior art provides acceptable product properties with polymer particles having a mean size of 300 $\mu$m. However, using polymer particles having a size of 1700 $\mu$m leads to products having inferior properties as can be seen from examples RE2 and RE3. With the inventive process the product properties with polymer particles having a size of 300 $\mu$m are already improved as can be seen from the comparison of RE1 with IE4. However, with particle sizes of 1700 $\mu$m significantly improved properties are obtained while simultaneously a lower treatment time is needed as can be seen from the comparison of IE6 with RE3.

Although the examples exclusively relate to the treatment of polypropylenes with peroxide and butadiene, the skilled person will readily appreciate that improved properties will also be provided in case of other components which are to be soaked into a polymer.

**Claims**

1. A process for the chemical treatment of polymers comprising the following steps:

    i) providing a polymer P);
    ii) introducing the polymer P) into a spouted bed mixer;
    iii) keeping the polymer P) within the spouted bed mixer such that the mean residence time $\tau$ of the polymer P) in the spouted bed mixer is at least 1 minute;
    iv) optionally, contacting the polymer P) with a chemical substance B) in the spouted bed mixer during step iii);
    v) withdrawing the polymer from the spouted bed mixer whereby a chemical substance A) is added to the polymer P) during the course of steps i) to iii) or, in case step iv) is present during the course of steps i) to iv).

2. The process according to claim 1, wherein the polymer P) is a propylene homo- or copolymer.

3. The process according to any one of the preceding claims, wherein the chemical substance A) is a radical forming compound.

4. The process according to any one of the preceding claims, wherein the chemical substance B) is a bifunctionally unsaturated monomer.

5. The process according to any one of the preceding claims, wherein the spouted bed mixer is equipped with means for reducing back-mixing, such as draft plates or a screw.

6. The process according to any one of the preceding claims, wherein component B) is present and G) and B) are mixed prior to introduction into the spouted bed mixer.

7. The process according to any one of the preceding claims, wherein the gas G) is introduced into the spouted bed mixer with a superficial gas velocity of 5 to 40 m/s.

8. The process according to any one of the preceding claims, wherein polymer P) is in particulate form and the particle size of the polymer P) is from 50 $\mu$m to 4000 $\mu$m.

9. The process according to any one of the preceding claims, wherein the following relationship is fulfilled

$$\tau \geq 2.0\, t_c$$

wherein

$\tau$ is the mean residence time of the particles of the polymer P) in the spouted bed mixer; and
$t_c$ is the cycle time $t_c$ of the particles of the polymer P) in the spouted bed mixer.

10. The process according to any one of the preceding claims, wherein the mean residence time $\tau$ of the particles of the polymer P) in the spouted bed mixer is from 1 to 30 min.

11. A spouted bed mixer for the chemical treatment of polymers comprising feeding means for feeding polymer to the spouted bed mixer whereby the feeding means are equipped with means for contacting the polymer with a chemical substance A) prior to feeding to the spouted bed mixer.

12. The spouted bed mixer according to claim 11, wherein the spouted bed mixer is equipped with means for reducing back-mixing, such as draft plates or a screw.

13. Use of a spouted bed mixer in the production of high melt strength polypropylene.

14. A polymer obtainable by the process according to any one of the preceding claims 1 to 10.

**Amended claims in accordance with Rule 137(2) EPC.**

1. A process for the chemical treatment of polymers comprising the following steps:

i) providing a polymer P);
ii) introducing the polymer P) into a spouted bed mixer;
iii) keeping the polymer P) within the spouted bed mixer such that the mean residence time $\tau$ of the polymer P) in the spouted bed mixer is at least 1 minute;
iv) optionally, contacting the polymer P) with a chemical substance B) in the spouted bed mixer during step iii);
v) withdrawing the polymer from the spouted bed mixer whereby a chemical substance A) is added to the polymer P) during the course of steps i) to iii) or, in case step iv) is present during the course of steps i) to iv)

whereby
polymer (P) is in particulate form, and
a gas (G) is introduced into the spouted bed mixer during step iii).

2. The process according to claim 1, wherein the polymer P) is a propylene homo- or copolymer.

3. The process according to any one of the preceding claims, wherein the chemical substance A) is a radical forming compound.

4. The process according to any one of the preceding claims, wherein the chemical substance B) is a bifunctionally unsaturated monomer.

5. The process according to any one of the preceding claims, wherein the spouted bed mixer is equipped with means for reducing back-mixing, such as draft plates or a screw.

6. The process according to any one of the preceding claims, wherein component B) is present and G) and B) are mixed prior to introduction into the spouted bed mixer.

7. The process according to any one of the preceding claims, wherein the gas G) is introduced into the spouted bed mixer with a superficial gas velocity of 5 to 40 m/s.

8. The process according to any one of the preceding claims, wherein the mean particle size of the polymer P) is from 50 $\mu$m to 4000 $\mu$m, the mean particle size d50 being calculated from the particle size distribution in terms of mass percentage as determined by laser diffraction technique according to ISO 13320-1.

9. The process according to any one of the preceding claims, wherein the following relationship is fulfilled

$$\tau \geq 2.0 \, t_c$$

wherein

$\tau$ is the mean residence time of the particles of the polymer P) in the spouted bed mixer; and
$t_c$ is the cycle time $t_c$ of the particles of the polymer P) in the spouted bed mixer.

10. The process according to any one of the preceding claims, wherein the mean residence time $\tau$ of the particles of the polymer P) in the spouted bed mixer is from 1 to 30 min.

11. Use of a spouted bed mixer in the production of high melt strength polypropylene.

12. A polymer obtainable by the process according to any one of the preceding claims 1 to 10.

**F I G U R E S**

Figure 1

Europäisches
Patentamt

European
Patent Office

Office européen
des brevets

## EUROPEAN SEARCH REPORT

Application Number

EP 14 16 9934

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 471 463 A2 (SHELL OIL CO [US]) 19 February 1992 (1992-02-19) | 14 | INV. $C08J3/20$ $C08L23/10$ $B01J8/24$ $C08L23/26$ |
| A | * claims 1-6; examples * | 1,2,8 | |
| | ----- | | |
| X | WO 97/28408 A1 (SMIDTH & CO AS F L [DK]; TOUBORG JORN [DK]) 7 August 1997 (1997-08-07) * claims 1,9; figure 1 * | 11 | ADD. $C08L23/12$ $C08K5/14$ $C08K5/01$ $C08F8/00$ $C08F255/02$ $C08F236/06$ |
| | ----- | | |
| A | EP 0 104 282 A1 (CHISSO CORP [JP]) 4 April 1984 (1984-04-04) * claims; figures * * page 1, line 5 - page 2, line 4 * | 11,12 | |
| | ----- | | |
| A,D | EP 0 879 830 A1 (PCD POLYMERE AG [AT] BOREALIS GMBH [AT]) 25 November 1998 (1998-11-25) * claims; figure 1; examples * | 1-4,8,14 | |
| | ----- | | |

### TECHNICAL FIELDS SEARCHED (IPC)

C08J
C08L
B01J
C08F
F26B
B01F

The present search report has been drawn up for all claims

| Place of search | Date of completion of the search | Examiner |
|---|---|---|
| Munich | 2 October 2014 | Hollender, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 14 16 9934

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2014

| Patent document cited in search report | | Publication date | Patent family member(s) | | Publication date |
|---|---|---|---|---|---|
| EP 0471463 | A2 | 19-02-1992 | CA | 2048227 A1 | 01-02-1992 |
| | | | EP | 0471463 A2 | 19-02-1992 |
| | | | JP | H05345316 A | 27-12-1993 |
| WO 9728408 | A1 | 07-08-1997 | AU | 699241 B2 | 26-11-1998 |
| | | | AU | 1301997 A | 22-08-1997 |
| | | | BR | 9612474 A | 13-07-1999 |
| | | | CA | 2239026 A1 | 07-08-1997 |
| | | | CN | 1208462 A | 17-02-1999 |
| | | | CZ | 9802276 A3 | 13-07-2005 |
| | | | DE | 69607770 D1 | 18-05-2000 |
| | | | DE | 69607770 T2 | 17-08-2000 |
| | | | DK | 10996 A | 03-08-1997 |
| | | | EP | 0877907 A1 | 18-11-1998 |
| | | | ES | 2144804 T3 | 16-06-2000 |
| | | | GR | 3033934 T3 | 30-11-2000 |
| | | | ID | 15868 A | 14-08-1997 |
| | | | JP | 4083220 B2 | 30-04-2008 |
| | | | PL | 328013 A1 | 04-01-1999 |
| | | | RU | 2150060 C1 | 27-05-2000 |
| | | | US | 6000145 A | 14-12-1999 |
| | | | WO | 9728408 A1 | 07-08-1997 |
| | | | ZA | 9700445 A | 29-07-1997 |
| EP 0104282 | A1 | 04-04-1984 | DE | 3274195 D1 | 02-01-1987 |
| | | | EP | 0104282 A1 | 04-04-1984 |
| EP 0879830 | A1 | 25-11-1998 | AT | 227744 T | 15-11-2002 |
| | | | CZ | 9801522 A3 | 16-06-1999 |
| | | | EP | 0879830 A1 | 25-11-1998 |
| | | | ES | 2187854 T3 | 16-06-2003 |
| | | | JP | H10330436 A | 15-12-1998 |
| | | | US | 6204348 B1 | 20-03-2001 |
| | | | US | 6433109 B1 | 13-08-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0879830 A

- EP 0220912 A

**Non-patent literature cited in the description**

- **M. H. WAGNER.** Rheotens-Mastercurves and Drawability of Polymer Melts. *Polymer Engineering and Sience,* vol. 36, 925-635